Europäisches Patentamt

European Patent Office

Office européen des brevets

(19)

(11) Veröffentlichungsnummer : **0 048 822**
**B1**

(12) **EUROPÄISCHE PATENTSCHRIFT**

(45) Veröffentlichungstag der Patentschrift :
18.06.86

(51) Int. Cl.⁴ : **G 05 G   9/08, F 16 K 11/16**

(21) Anmeldenummer : **81106673.7**

(22) Anmeldetag : **27.08.81**

(54) Nockensteuerung.

(30) Priorität : 26.09.80 US 191643

(43) Veröffentlichungstag der Anmeldung :
07.04.82 Patentblatt 82/14

(45) Bekanntmachung des Hinweises auf die Patenterteilung : 18.06.86 Patentblatt 86/25

(84) Benannte Vertragsstaaten :
AT DE FR GB IT NL SE

(56) Entgegenhaltungen :
DE-C-   287 918
GB-A- 1 549 195
US-A- 2 214 271
US-A- 3 112 769

(73) Patentinhaber : DEERE & COMPANY
1 John Deere Road
Moline Illinois 61265 (US)

(72) Erfinder : Gardner, Frank H.
315 Sunny Lane Box 233
Hudson Iowa 50643 (US)
Erfinder : Kittle, Carl Edwin
2312 Primrose
Cedar Falls Iowa 50613 (US)

(74) Vertreter : Gramm, Werner, Prof. Dipl.-Ing.
Patentanwälte Gramm + Lins Theo-
dor-Heuss-Strasse 2
D-3300 Braunschweig (DE)

EP 0 048 822 B1

**Beschreibung**

Die Erfindung betrifft eine Nockensteuerung.

Die US-A-2 214 271 beschreibt eine Nockensteuerung zweier nebeneinanderliegender Tellerventile in einem Hydrauliksystem. Die Nockensteuerung besteht aus einer Halterung, in der eine Kipphebelwelle horizontal gelagert ist, auf der eine verstellbare Nockeneinrichtung sitzt, auf die die hin- und hergehende Drehbewegung der genannten Welle durch Übertragungsmittel übertragen wird. Diese Nockeneinrichtung weist für jeweils ein Ventilpaar ein schuhförmig ausgebildetes verschwenkbares Nockenelement auf, in dem zwei den beiden Ventilstößeln zugeordnete Nockenrollen angeordnet sind. Mittig im Nockenelement ist eine nach oben offene rinnenförmige Nut vorgesehen, mit der das Nockenelement die genannte Kipphebelwelle von unten umgreift. Dieses Nockenelement wird justierbar getragen von zwei Justierschrauben, die in Gewindebohrungen eines Kipphebels geführt sind, der drehfest mit der Kipphebelwelle verbunden ist. Der Kipphebel weist zwei sich gegenüberliegende Hebelarme auf, die jeweils unterhalb einer Nockenrolle des Nockenelementes liegen und die Schraubführung für die genannten Justierschrauben bilden, deren jeweilige Stellung über eine Kontermutter festlegbar ist. Durch Anziehen einer Justierschraube wird somit der entsprechende Arm des Nockenelementes und damit die in diesem Arm gelagerte Nockenrolle etwas angehoben, so daß sich durch Verstellung der Justierschraube der Hub des zugeordneten Ventils einstellen läßt. Durch Anordnung der Nockenrollen sowie des Abstandes der Drehachsen der beiden Nockenrollen voneinander bezogen auf den Abstand der Längsachsen der Ventilschäfte voneinander soll die von der Nockenrolle auf den Ventilschaft übertragene Betätigungskraft immer in Längsrichtung des Ventilschaftes wirken.

Bei dieser Ausführungsform führt die Justierung einer Nockenrolle meist zu einer ungewünschten Verstellung der anderen Nockenrolle.

Der Erfindung liegt daher die Aufgabe zugrunde, die eingangs beschriebene Nockensteuerung hinsichtlich der Justierung der Nocken zu verbessern.

Diese Aufgabe wird gemäß der Erfindung durch eine Nockensteuerung mit folgenden Merkmalen gelöst :

a) in einer Halterung ist eine Kipphebelwelle (horizontal) gelagert, auf der zumindest ein Nockenelement sitzt, auf das die hin- und hergehende Drehbewegung der Welle durch Übertragungsmittel übertragen wird ;

b) ein Kipphebel weist einen Hebelarm auf, der mit seinem einen Ende (unteren) drehfest mit der Kipphebelwelle verbunden ist und sich von dort zu seinem freien anderen Ende (oberen) erstreckt ;

c) ein Nockenelement ist neben dem Hebelarm angeordnet, erstreckt sich in Richtung desselben (nach oben) und weist in seinem einen Endteil (unteren) eine Öffnung auf, durch die die Kipphebelwelle hindurchragt, und die zumindest in Längsrichtung des genannten Hebelarmes größer ist als der Durchmesser der Kipphebelwelle, so daß das Nockenelement zumindest in Längsrichtung des Hebelarmes und relativ hierzu eine Bewegung ausüben kann ;

d) eine Verbindung zwischen Hebelarm und Nockenelement zur Erzeugung eines Gleichganges beider Teile, wobei diese Verbindung eine Leerhub-Einrichtung aufweist, die mit zumindest einem Anschlag zur Begrenzung der genannten Längsbewegung des Nockenelementes versehen ist und zusammen mit der genannten größeren Öffnung eine schwimmende Lagerung des Nockenelementes bildet.

Dabei ist es zweckmäßig, wenn die Leerhub-Einrichtung aus einem in einem der beiden genannten Teile angeordneten und sich in dessen Längsrichtung erstreckenden Längsschlitz sowie aus einem in dem anderen der beiden Teile vorgesehenen Längsschlitz-Mitnehmer besteht.

Die genannte Verbindung kann aus einem Bolzen bestehen, der im Abstand (vertikalen) von der Kipphebelwelle angeordnet ist, und um den das Endteil (untere) des Nockenelementes relativ zum Hebelarm innerhalb der Begrenzungen der genannten Öffnung verschwenkbar ist.

Dabei ist es vorteilhaft, wenn zwischen Kipphebel und Nockenelement eine Justiereinrichtung angeordnet ist, durch die das Nockenelement relativ gegenüber dem Kipphebel innerhalb der Begrenzungen durch die Leerhub-Einrichtung justierbar ist.

Eine spezielle erfindungsgemäße Konstruktion kann folgende Merkmale aufweisen :

a) Das Nockenelement ist etwa T-förmig ausgebildet, wobei der T-Fuß das genannte Endteil (untere) bildet, während die beiden den T-Träger bildenden Arme im Abstand (oberhalb) von der Kipphebelwelle in einer Ebene senkrecht zur Längsachse der Kipphebelwelle liegen ;

b) der Kipphebel hat etwa die Form eines umgekehrten T, dessen den T-Träger bildenden Schenkel im Abstand (unterhalb) von den genannten Armen des Nockenelementes liegen ;

c) die Justiereinrichtung besteht aus einem Paar Justierelementen, die zwischen den genannten Schenkeln und Armen angeordnet sind.

Weitere Merkmale und Vorteile der Erfindung ergeben sich aus der konstruktiven Beschreibung.

In der Zeichnung ist eine als Beispiel dienende Ausführungsform der Erfindung dargestellt. Es zeigen :

Figur 1  im Längsschnitt eine Nockensteuerung und

Figur 2  einen Schnitt gemäß der Linie 2-2 in Figur 1.

Sowohl in den Patentansprüchen als auch in der nachfolgenden Beschreibung ist die Anordnung der einzelnen Bauteile zueinander mit Bezeichnungen wie horizontal, oben, unten u. dgl. angegeben. Diese Begriffe beziehen sich auf das dargestellte Ausführungsbeispiel und wurden lediglich zur Vereinfachung der Definition gewählt, dienen aber in keiner Weise zur Einschränkung der Erfindung auf eben diese Anordnung.

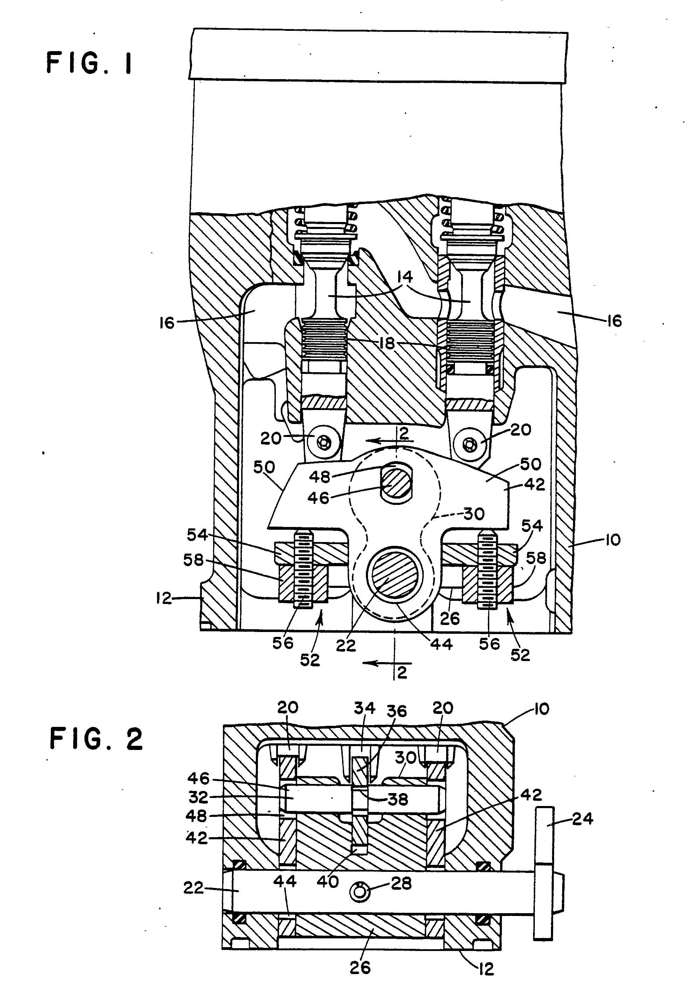

Figur 1 zeigt ein typisches Ausführungsbeispiel für eine Nockensteuerung, die aus einer Halterung 10 bzw. einem Gehäuse mit einem Bodenteil 12 besteht, das an einer an sich beliebigen Maschine montiert sein kann. In dem oberen Teil des Gehäuses sind zwei Paar Tellerventile 14 vorgesehen, von denen ein Paar in Figur 1 dargestellt ist. Die Ventile 14 steuern wahlweise eine Vielzahl Hydraulikleitungen 16. Jedes Ventil gleitet unabhängig von dem anderen in seiner eigenen vertikalen Ventilbohrung 18 und wird von einem unteren Nockenstößel oder einer Nockenrolle 20 beaufschlagt.

Um die Ventile wahlweise öffnen oder schließen zu können, ist in dem Gehäuse 10 eine Kipphebelwelle 22 gelagert, die bei dem dargestellten Ausführungsbeispiel horizontal liegt und zwar unterhalb und zwischen den beiden Ventilbohrungen 18. Die Lagerung dieser Kipphebelwelle ist an sich beliebig ; ein Ausführungsbeispiel zeigt Figur 2. An einem sich aus dem Gehäuse 10 erstreckenden Ende der Kipphebelwelle sitzt ein Arm oder Hebel 24. Ein Kipphebel 26 ist mit der Kipphebelwelle über einen Querstift 28 (siehe Figur 2) drehfest verbunden und weist einen nach oben ragenden Hebelarm 30 auf, der — wenn beide Ventile geschlossen sind — die in Figur 1 dargestellte neutrale Stellung im wesentlichen mittig zwischen und unterhalb den Nockenrollen 20 einnimmt. Gemäß dem speziellen Ausführungsbeispiel ist das obere Ende des Hebelarmes 30 gabelförmig ausgebildet und weist einen quer verlaufenden Bolzen 32 bzw. Schlitz-Mitnehmer auf. Zwischen den beiden gabelförmigen Fingern des Hebelarmes 30 ist am Gehäuse 10 eine Schlitzführung 34 vorgesehen, in die ein scheibenähnliches Teil, z. B. eine Ringscheibe 36 eingreift, die dazu dient, den Kipphebel 26 in seiner mittigen oder neutralen Stellung lösbar festzuhalten. Derartige Einrichtungen sind allgemein bekannt und bilden keinen Teil der vorliegenden Erfindung. Jedoch dient die genannte Ringscheibe 36 erfindungsgemäß auch zur Festlegung des Bolzens 32 ; um nämlich eine Axialverschiebung des Bolzens 32 aus dem Kipphebel 26 heraus zu verhindern, greift die Ringscheibe 36 gleichzeitig mit ihrem äußeren Rand in einen Schlitz 40 des Hebelarmes 30 und in die genannte Schlitzführung 34 der Halterung 10 und mit ihrem inneren Rand in eine Ringnut 38 des Bolzens 32 ein.

Beidseitig des Hebelarmes 30 des Kipphebels 26 sind zwei Nockenelemente 42 angeordnet, die gleich ausgebildet sind, so daß nachfolgend nur eines im Detail beschrieben wird. Der mittlere Teil des Nockenelementes ist länglich ausgebildet und erstreckt sich in gleicher Richtung wie der nach oben ragende Hebelarm 30, während das untere Endteil des Nockenelementes mit einer Öffnung 44 ausgestattet ist, deren Durchmesser etwas größer ist als der der Kipphebelwelle 22. Dadurch kann das Nockenelement relativ gegenüber der Kipphebelwelle sowie dem Kipphebel bewegt werden und zwar zumindest innerhalb des Spiels, das sich aus den unterschiedlichen Durchmessern ergibt. In diesem Umfang hat also das Nockenelement 42 gegenüber dem Kipphebel und der Kipphebelwelle ein Spiel.

Da aber das Nockenelement die hin- und hergehende Drehbewegung der Kipphebelwelle ausüben muß, müssen zwischen beiden Teilen entsprechende Übertragungsmittel vorgesehen sein. Ein Teil dieser Übertragungsmittel stellt einen Axialabschnitt 46 am Ende des Bolzens 32 dar, während als zweites Teil durch einen Längsschlitz 48 im oberen Endteil des Nockenelementes gebildet wird. Der genannte Axialabschnitt 46 ragt in den genannten Längsschlitz 48, und beide Teile bilden eine Leerhub-Einrichtung zwischen Nockenelement und Kipphebel. Figur 1 läßt erkennen, daß sich der Längsschlitz 48 in Längsrichtung des Hebelarmes 30 erstreckt und mit seinen Vertikalkanten an dem genannten Axialabschnitt 46 des Bolzens 32 anliegt. Letzterer ist also in einer Horizontalebene festgelegt, während das obere Ende des Nockenelementes entlang des Hebelarmes 30 nach oben und unten bewegbar ist. Da der Axialabschnitt 46 mit dem Längsschlitz 48 eine verschiebbare Schwenkverbindung bildet, kann der untere Teil des Nockenelementes horizontal und im wesentlichen diametral relativ gegenüber der Kipphebelwelle innerhalb der durch den Durchmesser der Öffnung 44 bestimmten Grenzen verschwenken. Obwohl also Nockenelement und Kipphebel im Gleichlauf um die Achse der Kipphebelwelle hin und her schwenken, unterliegt das Nockenelement einer begrenzten « schwimmenden » Lagerung.

Da zwei Ventile gesteuert werden sollen, ist das Nockenelement im wesentlichen T-förmig ausgebildet, wobei der mittlere Teil den T-Fuß bildet, von dessen oberem Ende sich ein rechter und ein linker Arm 50 in entgegengesetzten Richtungen erstrecken, wobei diese Arme im wesentlichen in der gleichen Ebene liegen, die ihrerseits senkrecht zur Längsachse der Kipphebelwelle liegt. Die Oberseite jedes Armes 50 ist so ausgebildet, daß, wenn die Kipphebelwelle beispielsweise im Uhrzeigersinn verdreht wird, die genannte Oberfläche mit einer Nockenkante die zugeordnete Nockenrolle beaufschlagt und dadurch das entsprechende Ventil nach oben in seine Offenstellung verschiebt. Bei der genannten Verschwenkbewegung entfernt sich die andere Nockenkante von der Nockenrolle des anderen Ventils, das dadurch geschlossen bleibt bzw. geschlossen wird.

Die Justierung zwischen Kipphebel und Nockenelement erfolgt über eine Justiereinrichtung 52. Der Kipphebel hat hierfür die Form eines umgekehrten « T », wobei der Hebelarm 30 nach oben ragt und in seinem unteren Bereich in entgegengesetzte Richtungen ragende Schenkel 54 aufweist, die unterhalb der Nockenarme 50 liegen. Die genannte Justiereinrichtung 52 umfaßt eine Justierschraube 56 mit einer Kontermutter 58, wobei diese Justierelemente jeweils zwischen den genannten Schenkeln 54 und Armen 50 angeordnet sind. Nach erfolgter Justierung des Nockenelementes sollen die Nockenrollen 20 gerade oberhalb der Nockenkanten der Nockenarme 50 liegen, wobei sich beide Ventile in Schließstellung befinden sollen, wenn sich die Vorrichtung in neutraler Stellung befindet.

Die Verbindung zwischen Nockenelement und Kipphebel ist so, daß die richtige Kraftübertragungslinie zwischen Nockenkante und zugeordneter Nockenrolle aufrechterhalten wird, wenn der Nocken verschwenkt wird, d. h. daß die Kraftlinie dann, wenn sich der Nocken in seiner neutralen Stellung befindet, gegen die Längsachse der Kipphebelwelle gerichtet ist, so daß eine gerade gerichtete Kraft auf das Ventil ausgeübt wird, wenn der Nocken verschwenkt wird. Durch die « schwimmende » Lagerung des Nockenelementes erhält man eine genauere Betätigung bei der Öffnung und Schließung der Ventile. Die erfindungsgemäße Vorrichtung ist besonders einfach und preiswert herzustellen und benutzt zahlreiche übliche Bauteile.

Für einen Durchschnittsfachmann ergeben sich aus den vorstehenden Erläuterungen ohne weiteres zahlreiche Modifikationen, Abwandlungen und Verbesserungen des Erfindungsgegenstandes, die durch diese Anmeldung erfaßt sein sollen.

**Patentansprüche**

1. Nockensteuerung mit folgenden Merkmalen :

a) in einer Halterung (10) ist eine Kipphebelwelle (22 horizontal) gelagert, auf der zumindest ein Nockenelement (42) sitzt, auf das die hin- und hergehende Drehbewegung der Welle durch Übertragungsmittel (30, 32, 46, 48) übertragen wird ;

b) ein Kipphebel (26) weist einen Hebelarm (30) auf, der mit seinem einen Ende (unteren) drehfest mit der Kipphebelwelle (22) verbunden ist und sich von dort zu seinem freien anderen Ende (oberen) erstreckt ;

c) ein Nockenelement (42) ist neben dem Hebelarm (30) angeordnet, erstreckt sich in Richtung desselben (nach oben) und weist in seinem einen Endteil (unteren) eine Öffnung (44) auf, durch die die Kipphebelwelle (22) hindurchragt, und die zumindest in Längsrichtung des genannten Hebelarmes (30) größer ist als der Durchmesser der Kipphebelwelle, so daß das Nockenelement (42) zumindest in Längsrichtung des Hebelarmes (30) und relativ hierzu eine Bewegung ausüben kann ;

d) eine Verbindung zwischen Hebelarm (30) und Nockenelement (42) zur Erzeugung eines Gleichganges beider Teile, wobei diese Verbindung eine Leerhub-Einrichtung (46, 48) aufweist, die mit zumindest einem Anschlag zur Begrenzung der genannten Längsbewegung des Nockenelementes (42) versehen ist und zusammen mit der genannten größeren Öffnung (44) eine schwimmende Lagerung des Nockenelementes (42) bildet.

2. Nockensteuerung nach Anspruch 1, dadurch gekennzeichnet, daß die Leerhub-Einrichtung aus einem in einem der beiden genannten Teile (30, 42) angeordneten und sich in dessen Längsrichtung erstreckenden Längsschlitz (48) sowie aus einem in dem anderen der beiden Teile (30, 42) vorgesehenen Längsschlitz-Mitnehmer (46) besteht.

3. Nockensteuerung nach Anspruch 1 oder 2, dadurch gekennzeichnet, daß die genannte Öffnung (44) im Endteil (unteren) des Nockenelementes (42) auch quer zur Längsrichtung des Hebelarmes (30) größer ist als der Durchmesser der Kipphebelwelle (22).

4. Nockensteuerung nach Anspruch 1, 2 oder 3, dadurch gekennzeichnet, daß die genannte Verbindung aus einem Bolzen (32) besteht, der im Abstand (vertikalen) von der Kipphebelwelle (22) angeordnet ist, und um den das Endteil (untere) des Nockenelementes (42) relativ zum Hebelarm (30) innerhalb der Begrenzungen der genannten Öffnung (44) verschwenkbar ist.

5. Nockensteuerung nach einem der vorhergehenden Ansprüche, dadurch gekennzeichnet, daß zwischen Kipphebel (26) und Nockenelement (42) eine Justiereinrichtung (52) angeordnet ist, durch die das Nockenelement (42) relativ gegenüber dem Kipphebel (26) innerhalb der Begrenzungen durch die Leerhub-Einrichtung (46, 48) justierbar ist.

6. Nockensteuerung nach Anspruch 5, gekennzeichnet durch folgende Merkmale :

a) das Nockenelement (42) ist etwa T-förmig ausgebildet, wobei der T-Fuß das genannte Endteil (untere) bildet, während die beiden den T-Träger bildenden Arme (50) im Abstand (oberhalb) von der Kipphebelwelle (22) in einer Ebene senkrecht zur Längsachse der Kipphebelwelle liegen ;

b) der Kipphebel (26) hat etwa die Form eines umgekehrten T, dessen den T-Träger bildenden Schenkel (54) im Abstand (unterhalb) von den genannten Armen (50) des Nockenelementes (42) liegen ;

c) die Justiereinrichtung (52) besteht aus einem Paar Justierelementen (56, 58), die zwischen den genannten Schenkeln (54) und Armen (50) angeordnet sind.

7. Nockensteuerung nach einem der Ansprüche 2 bis 6, dadurch gekennzeichnet, daß der Längsschlitz (48) der Leerhub-Einrichtung mit seinen Längskanten beidseitig an dem Längsschlitz-Mitnehmer (46) anliegt.

8. Nockensteuerung nach einem der Ansprüche 4 bis 7, dadurch gekennzeichnet, daß das eine Ende (obere) des Hebelarmes (30) zwei gabelförmige Finger aufweist, zwischen denen auf dem Bolzen (32) eine Ringscheibe (36) angeordnet ist, die gleichzeitig mit ihrem äußeren Rand in einen Schlitz (40) des Hebelarmes (30) und in eine Schlitzführung (34) der Halterung (10) und mit ihrem inneren Rand in eine Ringnut (38) des Bolzens (32) eingreift.

## Claims

1. A cam control mechanism comprising the following features :

a) A rockshaft (22 horizontal) mounted in a support (10), at least one cam element (42) on said rockshaft (22) and connection elements (30, 32, 46, 48) to transmit rocking movement of the rockshaft onto the cam element ;

b) a rocker arm (26) having a lever arm (30) including one end portion (lower) fixed to the rockshaft (22) and rising therefrom to its free other end portion (upper) ;

c) a cam element (42) positioned beside said lever arm (30), extending in the direction of said lever arm (upwards) and having one end portion (lower) provided with an opening (44) receiving the rockshaft (22), said opening (44) being larger at least in the longitudinal direction of said lever arm (30) than the rockshaft diameter to enable movement of the cam element (42) at least lengthwise of and relative to said lever arm (30) ;

d) a connection between lever arm (30) and cam element (42) for effecting rocking thereof in unison and including lost-motion means (46, 48) comprising at least one stop for limiting said lengthwise movement of the cam element (42), said lost-motion means (46, 48) together with said larger opening (44) constitutes a floating support of said cam element (42).

2. The control mechanism according to claim 1, wherein said lost-motion means is an elongated slot (48) in and lengthwise of one of said two elements (30, 42) and a slot follower (46) on the other element (30, 42).

3. The control mechanism according to claim 1 or 2, wherein said opening (44) in the end portion (lower) of the cam element (42) is also transverse to the longitudinal direction of the lever arm (30) larger than the rockshaft diameter.

4. The control mechanism according to claim 1, 2 or 3, wherein said connection includes a pivot stud (32) spaced (vertically) from the rockshaft (22) and about which the end portion (lower) of the cam element (42) may swing relative to the lever arm (30) within the limits of said opening (44).

5. The control mechanism according to one of the preceding claims, wherein adjusting means (52) is arranged between rocker arm (26) and cam element (42) for adjusting the cam element (42) relative to the rocker arm (26) within the limits of the lost-motion means (46, 48).

6. The control mechanism according to claim 5, comprising the following features :

a) the cam element (42) is generally of T-shape, the T-foot forming said end portion (lower), while the two arms (50) forming the T-carrier are spaced (above) from the rockshaft (22) coplanar in a plane normal to the longitudinal rockshaft axis ;

b) the rocker arm (26) is of generally inverted T-shape having wings (54) forming the T-carrier and being spaced (below) from said arms (50) of the cam element (42) :

c) the adjusting means (52) includes a pair of adjusting elements (56, 58) positioned between said wings (54) and arms (50).

7. The control mechanism according to one of the claims 2 to 6, wherein the elongated slot (48) of the lost-motion means abuts with its longitudinal edges on both sides against the elongated slot-follower.

8. The control mechanism according to one of the claim 4 to 7, wherein the one end portion (upper) of said lever arm (30) includes bifurcated fingers, arranged between the furcations of the lever arm and mounted on said pivot stud (32) is a ring-shaped plate-like member (36) engaging simultaneously with its outer rim a slot (40) of the lever arm (30) and a slot guide (34) of the support (10) and with its inner rim an annular slot (38) of said pivot stud (32).

## Revendications

1. Dispositif de commande par came présentant les caractéristiques suivantes :

a) un axe de levier basculant ou culbuteur (22, horizontal) est tourillonné dans un support (10), cet axe portant au moins un élément formant came (42) auquel le mouvement angulaire alternatif de l'axe est transmis par des organes de transmission (30, 32, 46, 48) ;

b) un levier basculant ou culbuteur (26) présente un bras de levier (30) qui est calé angulairement par une extrémité (inférieure) sur l'axe de levier basculant (22) et qui s'étend depuis celui-ci jusqu'à son autre extrémité (supérieure) libre :

c) un élément formant came (42) est disposé à côté du bras de levier (30), il s'étend dans la direction de celui-ci (vers le haut) et il comporte dans l'une de ses extrémités (inférieure) un orifice (44) à travers lequel l'axe de levier basculant (22) fait saillie et qui au moins dans la direction longitudinale du bras de levier précité (30) est plus grand que le diamètre de l'axe de levier basculant, de sorte que l'élément formant came (42) peut effectuer un déplacement au moins dans la direction longitudinale du bras de levier (30) et relativement à celui-ci ;

d) une liaison entre le bras de levier (30) et l'élément formant came (42) pour fournir un mouvement synchronisé de ces deux éléments, cette liaison présentant un dispositif avec course à vide (46, 48) qui est muni d'au moins une butée pour limiter le mouvement longitudinal précité de l'élément formant came (42) et qui fournit conjointement à l'orifice de plus grande dimension précité (44) un montage flottant pour l'élément formant came (42).

2. Dispositif de commande par came suivant la revendication 1, caractérisé en ce que le dispositif avec course à vide est constitué par une fente longitudinale (48) ménagée dans l'un des deux éléments mentionnés (30, 42) et s'étendant dans leur direction longitudinale, ainsi que par un élément d'entraînement (46) conjugué à la fente et prévu dans l'autre des deux éléments (30, 42).

3. Dispositif de commande par came suivant la revendication 1 ou 2, caractérisé en ce que l'orifice précité (44) prévu dans l'extrémité (inférieure) de l'élément formant came (42) a également transversalement à la direction longitudinale du bras de levier (30) une dimension supérieure au diamètre de l'axe de levier basculant (22).

4. Dispositif de commande par came suivant la revendication 1, 2 ou 3, caractérisé en ce que la liaison précitée est constituée par un axe (32) qui est écarté (verticalement) de l'axe de levier basculant (22) et autour duquel l'extrémité (inférieure) de l'élément formant came (42) peut pivoter relativement au bras de levier (30) à l'intérieur des limites définies par l'orifice précité (44).

5. Dispositif de commande par came suivant l'une quelconque des revendications précédentes, caractérisé en ce qu'il est prévu, entre le levier basculant (26) et l'élément formant came (42), un dispositif de réglage (52) au moyen duquel l'élément formant came (42) peut être réglé par rapport au levier basculant (26) dans les limites définies par le dispositif avec course à vide (46, 48).

6. Dispositif de commande par came suivant la revendication 5, caractérisé par les particularités suivantes :

a) l'élément formant came (42) a sensiblement une forme de T et la base de ce T forme l'extrémité (inférieure) précitée, tandis que les deux bras (50) constituant la branche transversale du T sont écartés (au-dessus) de l'axe de levier basculant (22), dans un plan perpendiculaire à la direction longitudinale de cet axe de levier basculant ;

b) le levier basculant (26) a sensiblement la forme d'un T renversé dont la branche (54) formant la branche transversale du T est écartée (au-dessous) des bras précités (50) de l'élément formant came (42) ;

c) le dispositif de réglage (52) est constitué par une paire d'éléments de réglage (56, 58) qui sont disposés entre les branches précitées (54) et les bras (50).

7. Dispositif de commande par came suivant l'une quelconque des revendications 2 à 6, caractérisé en ce que la fente longitudinale (48) du dispositif avec course à vide s'applique par ses bords longitudinaux des deux côtés contre l'élément d'entraînement (46) coopérant avec une fente.

8. Dispositif de commande par came suivant l'une quelconque des revendications 4 à 7, caractérisé en ce qu'une extrémité (supérieure) du bras de levier (30) comporte deux doigts en forme de fourchette entre lesquels est disposé un disque annulaire (36) monté sur l'axe (32), ce disque s'engageant simultanément par son bord extérieur dans une fente (40) du bras de levier (30) et dans un guide en forme de fente (34) du support (10), et par son bord intérieur dans une rainure annulaire (38) de l'axe (32).

6

FIG. 1

FIG. 2